# EUROPÄISCHE PATENTANMELDUNG

(11) **EP 1 905 577 A1**
(43) Veröffentlichungstag der Anmeldung: **02.04.2008**
(21) Anmeldenummer: 06405412.5
(22) Anmeldetag: 28.09.2006
(51) Int. Cl.: B32B 1/08, B32B 15/08, B29C 55/28

(54) **Schlauchbeutel aus einem mehrschichtigen Film**

(71) Anmelder: Alcan Technology & Management Ltd., 8212 Neuhausen am Rheinfall (CH)
(72) Erfinder: BEVILACQUA, Markus, 8213 Nenkirch (CH); JACOBSEN, Sven, 29683 Bad Fallingbostel (DE)
(74) Vertreter: Burkhart, Hans

(57) **Zusammenfassung**

Bei einem Schlauchbeutel aus einem mehrschichtigen Film liegt zumindest ein Teil der Schichten des mehrschichtigen Films als 3B-Film vor.

## Beschreibung

Die Erfindung betrifft einen vertikalen oder horizontalen Schlauchbeutel aus einem mehrschichtigen Film.

Schlauchbeutel zur vertikalen und horizontalen Befüllung sind bekannt. Typische Laminate für Schlauchbeutel sind in der Regel kleberkaschiert, wobei die Aussenlage üblicherweise aus einem orientierten Film besteht und als Druckträger und Träger für eine Barrierebeschichtung dient, eine Glanzoberfläche anbietet und eine gute Thermoresistenz besitzt. Je nach Einsatzgebiet liegt wahlweise ein weiterer orientierter oder nicht orientierter Polymerfilm oder eine metallische Folie als Barriereschichtträger oder als Schicht zur Verbesserung mechanischer Eigenschaften, wie z.B. Festigkeit, in der Mitte. Die Innenlage besteht üblicherweise aus einem nicht orientierten, z.B. im Blas- oder Cast-Verfahren hergestellten, mono- oder coextrudierten, heisssiegelbaren Film. Die einzelnen Filme werden mit lösungsmittelhaltigen oder lösungsmittelfreien 2-Komponenten-Klebern zum Teil in mehreren Arbeitsschritten fest zum Laminat verbunden. Dieses Verfahren hat verschiedene Nachteile: Vor der Beutelherstellung ist zur Kleberhärtung eine Verweilzeit nötig, die Umlaufkapital bindet. Im weiteren ist der Kleberkaschierprozess wegen Lösemittelverbrauch und - rückgewinnung aus ökonomischer und ökologischer Sicht nicht unbedenklich. Ein weiterer Risikofaktor sind z.B. primäre aromatische Amine, die bei nicht vollständig ausreagiertem Kleber ins Packgut migrieren können. Wünschenswert wäre deshalb ein Verfahren, das keine Verweilzeit benötigt und keine Reaktivchemie beinhaltet.

Die Fertigpackungseigenschaften, wie Haptik, Formstabilität, Festigkeit, u.a.m., werden durch entsprechende Kombination der Schichten hinsichtlich Anordnung und Dicke erreicht, wobei im Bereich der orientierten Folien der Variationsspielraum, z.B. hinsichtlich verfügbarer Dicken und der Vielseitigkeit, eingeschränkt ist. So sind beispielsweise PET-Filme mit einer Dicke von weniger als 12 µm mit konventionellen Verfahren nicht ausreichend wirtschaftlich herstellbar. Dies führt zu Lösungen, die zwar technisch funktionieren, bei denen jedoch der zur Erzielung der entsprechenden Packungseigenschaft, wie z.B. eine wärmeresistente Aussenschicht, Siegelbarkeit u.a.m., erforderliche Materialeinsatz unverhältnismässig hoch ist. Wünschenswert sind daher für Schlauchbeutel geeignete Filmaufbauten, die in einem Arbeitsgang mit flexibel einstellbarer Schichtstruktur sowohl in Reihenfolge und Schichtdicke zur Erzielung der gewünschten Fertigpackungseigenschaften hergestellt werden können.

Biaxial gereckte Polymerfilme können u.a. über eine Blasfolienextrusion unter Bildung von zwei oder drei Blasen hergestellt werden. Im englischen Sprachgebrauch werden hierfür die Begriffe "double bubble (2B) process" bzw. "triple bubble (3B) process" verwendet. Die nachfolgend erläuterte Blasfolienextrusion mit 3 Blasen bzw. "triple bubble process" wird hierin auch als 3B-Verfahren und die nach dem 3B-Verfahren hergestellten Filme werden auch als 3B-Filme bezeichnet.

Bei dem 3B-Verfahren wird eine Polymermasse als Mono- oder Mehrschichtfilm durch eine Ringdüse zu einem dicken Schlauch extrudiert, nach dem Austritt aus der Düse auf einen genauen Durchmesser kalibriert und nachfolgend sofort mit Wasser abgeschreckt.

Anschliessend wird der Schlauch auf eine entsprechend ausgewählte Recktemperatur erwärmt und in einer weiteren Stufe unter Ausbildung einer zweiten Blase zwischen zwei Abzugswalzenpaaren zur Erweiterung des Blasendurchmessers erneut mit Luft oder einem anderen geeigneten Gas aufgeblasen und dabei in transversaler Richtung oder Querrichtung gereckt. Das Recken in longitudinaler Richtung oder Maschinenrichtung erfolgt über die Einstellung einer unterschiedlichen Drehzahl der die Blase in ihrer Längsrichtung begrenzenden Abzugswalzen. Der zu einer Blase expandierte Schlauch wird auf diese Weise mit einer im Vergleich zur Extrusionsgeschwindigkeit höheren Geschwindigkeit gefördert, so dass seine Orientierung in Quer- bzw. Maschinenrichtung erhalten bleibt.

Zur Entfernung der durch die biaxiale Orientierung eingebrachten und eingefrorenen Rückstellspannung wird der Film bzw. Schlauch zu einer dritten Blase aufgeweitet und im aufgeblasenen Zustand unter Einhaltung einer kontrollierter Temperatur und eines kontrollierten Blaseninnendrucks fixiert. Diese Wärmebehandlung der dritten Blase dient neben dem Abbau von Eigenspannungen vor allem bei mehrschichtigen Filmen zur Flachlage bei, alles unter Beibehaltung der durch die biaxiale Orientierung erzielten hohen Stabilität und guten mechanischen Festigkeit.

Der Erfindung liegt die Aufgabe zugrunde, einen Schlauchbeutel der eingangs genannten Art bereitzustellen, mit welchem die den Schlauchbeuteln nach dem Stand der Technik anhaftenden Nachteile vermieden werden. Insbesondere soll ein Schlauchbeutel aus einem mehrlagigen Film hergestellt werden können, der die oben genannten Eigenschaften aufgrund seiner Schichtanzahl, -reihenfolge und -dicke aufweist.

Zur erfindungsgemässen Lösung der Aufgabe führt, dass zumindest ein Teil der Schichten des mehrschichtigen Films als 3B-Film vorliegt.

Ein wesentlicher Vorteil der erfindungsgemäss eingesetzten 3B-Filme im Vergleich zu konventionell hergestellten Filmen bzw. Laminaten liegt darin, dass mit dem 3B-Verfahren Filme mit wesentlich geringeren Schichtdicken hergestellt werden können, was zu wesentlichen Materialeinsparungen führt. So sind mit dem 3B-Verfahren Filme mit PET-Schichten einer Dicke von beispielsweise 2 bis 12 µm möglich.

Ein weiterer wesentlicher Vorteil ergibt sich aus der Kombination von zwei dünnen Schichten mit guter Steifigkeit, wie z.B. PET, mit einer billigen Zwischenschicht als Distanzhalter oder Spacer. Auf diese Weise lassen sich steife Filme, die zur Erzielung einer ausreichenden Stehfähigkeit des Schlauchbeutels erforderlich sind, mit grossen Materialeinsparungen kostengünstig, erzeugen.

Zusätzliche Vorteile ergeben sich durch die aus der Einsparung von Prozesskosten bei Verzicht auf Reaktivkleber und Lösemittel bei der Herstellung resultierenden höhere Arbeitssicherheit und verbesserten Umweltbedingungen.

Hierin werden folgende Definitionen / Abkürzungen verwendet:
- PO: Polyolefin
- PE: Polyethylen
- PP: Polypropylen
- PA: Polyamid
- PA am: Amorpher PA
- PA arom: Aromatischer PA
- oPA: orientiertes Polyamid
- PET: Polyethylenterephthalat
- PETam: Amorpher PET
- PLA: Polylacqtique Acide (Polymilchsäure)
- TPS: Stärkebasierender Thermoplast
- PSA: Selbstklebende Schicht (Pressure Sensitive Adhesive)
- EVOH: Ethyl-Vinyl-Alkohol (Barriereschicht)
- HV: Haftvermittler
- SBS: Styrol-Butyl-Styrol Copolymer
- SEBS: Styrol-Etyl-Butyl-Styrol Copolymer
- SIS: Styrol-Isopren-Styrol Copolymer
- Alu: Aluminiumfolie (Barriereschicht)
- V2A: Rostfreier Stahl (Barriereschicht)
- met: Metallisierung aus Alu (Barriereschicht)
- SiOₓ: keramische Beschichtung aus SiOₓ (Barriereschicht)
- Al₂O₃: keramische Beschichtung aus Al₂O₃ (Barriereschicht)
- i: Drucktinte, Bedruckung (ink)
- L: Lackschicht (lacquer)
- a: Kleberschicht (adhesive)
- w: white
- b: black
- t: transparent
- ma: Schmelzkleber (melt adhesive)
- PANMA: Polyacrylnitril-Metacrylat Copoylmer
- coex: coextrudiert

Der 3B-Film kann mit wenigstens einer weiteren Schicht, insbesondere im Vorhanggussverfahren (Curtain Coating) oder über ein Schlitzdüsenbeschichtungsverfahren (Slot Die Coating), beschichtet sein.

Der nach dem 3B-Verfahren hergestellte 3B-Filmschlauch wird nach der Herstellung aufgeschnitten, auf Rolle gewickelt, und kann in einem weiteren Arbeitsschritt in- oder offline auf die nötige Breite geschnitten, direkt zu Schlauchbeuteln weiterverarbeitet werden. Für andere Anwendungen kann eine zusätzliche Beschichtung, Bedruckung und/oder ein anderer zusätzlicher Verfahrensschritt zur Erzielung von technologischen und erscheinungsbildlichen Eigenschaften nötig sein. In diesem Fall wird der nach dem 3B-Verfahren hergestellte 3B-Filmschlauch nach der Herstellung in eine zur Durchführung des weiteren Verfahrensschritts erforderliche Breite aufgeschnitten, auf Rolle gewickelt, dem Verfahrensschritt zugeführt, und anschliessend direkt zu Schlauchbeuteln weiterverarbeitet.

Unter gewissen Umständen kann es sinnvoll sein, den nach dem 3B-Verfahren hergestellten Film mit weiteren Filmen zu verkleben bzw. zu beschichten und/oder durch Aufdampfen von Metallen und/oder Oxiden mit einer Barriereschicht gegen Wasserdampf, Aromen, Gase sowie Migration unerwünschter Stoffe zu versehen.

Der 3B-Film oder die wenigstens eine weitere Schicht können insbesondere mit Aluminium metallisiert oder mit rostfreiem Stahl oder einem anderen Metall beschichtet sein.

Der 3B-Film oder die wenigstens eine weitere Schicht können keramisch, insbesondere mit SiOₓ oder mit Al₂O₃, beschichtet sein.

Der 3B-Film oder die wenigstens eine weitere Schicht können bedruckt und/oder mit einem Thermoschutzlack versehen sein.

Der 3B-Film oder die wenigstens eine weitere Schicht können aus komplett bioabbaubaren Polymeren bestehen.

Der 3B-Film umfasst bevorzugt wenigstens eine Heisssiegelschicht enthaltend ein Material ausgewählt aus der Gruppe der Polyolefine (PO), Polyamide (PA), Polyester und deren Copolymere, sowie der lonomeren (ION). Eingesetzt werden können ferner Schmelzkleber auf EVA- und anderer Basis, sowie Blends der vorgenannten Materialien.

Als typische Kernschichten dienen Polyamide, Polyester, Polyolefine und deren Copolymere, cycloolefinische Polymere, sowie die diese verbindenden Haftvermittler auf Basis von MAH, Acrylat und Carbonsäuren.

Als Barriereschichten können EVOH, PVOH oder aromatische Polyamide eingesetzt werden. Ebenfalls eingesetzt werden können selbstklebende Heisskleberschichten aus SBS, SIS, SEBS und einem Kleberharz eingesetzt werden.

Als Aussenschicht können typischerweise Materialien aus den Gruppen der Polyester, Polyamide, Polyolefine und deren Copolymere eingesetzt werden, die ausreichende Thermoresistenz aufweisen und von der Zusammensetzung und Additivierung her zur Vakuumbeschichtung geeignet sind.

Die Schlauchbeutel können bevorzugt in den folgenden Anwendungsgebieten eingesetzt werden:
- Schlauchbeutel zum Verpacken von Feucht-, Reinigungs- und Kosmetiktüchem. Ein für diesen Anwendungsbereich geeigneter 3B-Film kann beispielsweise den für die erfindungsgemässen Filme der Gruppe 1 in Tabelle 1 angegebenen Schichtaufbau aufweisen.
- Schlauchbeutel zum Verpacken von Kartoffel- Mais- und anderen Chips,Salzgebäck, schutzbegast oder nicht schutzbegast. Ein für diesen Anwendungsbereich geeigneter 3B-Film kann beispielsweise den für die erfindungsgemässen Filme der Gruppe 2 in Tabelle 1 angegebenen Schichtaufbau aufweisen.
- Schlauchbeutel zum Verpacken von Hartkäse. Ein für diesen Anwendungsbereich geeigneter 3B-Film kann beispielsweise den für die erfindungsgemässen Filme der Gruppe 3 in Tabelle 1 angegebenen Schichtaufbau aufweisen.
- Schlauchbeutel zum Verpacken von Zerealien wie Frühstückszerealien und Getreideriegel. Ein für diesen Anwendungsbereich geeigneter 3B-Film kann beispielsweise den für die erfindungsgemässen Filme der Gruppe 4 in Tabelle 1 angegebenen Schichtaufbau aufweisen.
- Schlauchbeutel zum Verpacken von Pulvermischungen für Getränke, Backwaren, gemahlenen Kaffee und Bohnenkaffee. Ein für diesen Anwendungsbereich geeigneter 3B-Film kann beispielsweise den für die erfindungsgemässen Filme der Gruppe 5 in Tabelle 1 angegebenen Schichtaufbau aufweisen.

Das 3B-Verfahren ermöglicht einen Filmaufbau aus vollständig bioabbaubaren Rohmaterialien.

Weitere Vorteile, Merkmale und Einzelheiten ergeben sich aus der nachfolgenden Beschreibung bevorzugter Ausführungsbeispiele.

In Tabelle 1 sind die zur Verpackung von Produkten in Schlauchbeuteln eingesetzten Laminate bzw. Filme nach dem Stand der Technik den erfindungsgemäss vorgesehenen Laminaten bzw. Filmen gegenübergestellt. Abhängig von der Art, vom Feuchtigkeitsgehalt, von der Lagerfähigkeit sowie weiteren Produkteigenschaften ergeben sich unterschiedliche Anforderungen an die Verpackungsmaterialien, welche in folgende Gruppen eingeteilt werden können:
- Gruppe 1:: Agressive Füllgüter
- Gruppe 2:: Salzgebäck + Chips
- Gruppe 3:: Hartkäse
- Gruppe 4:: Zerealienprodukte und Müesli
- Gruppe 5:: Pulvermischungen für Getränke, Backwaren, gemahlenen Kaffee und Bohnenkaffee, Zuckerkonfekt

**Tabelle1**

| Gruppe | Produkte | Laminate nach dem Stand der Technik | Erfindungsgemässe Laminate/Filme |
|---|---|---|---|
| 1 | z.B. Feuchttücher Reinigungstücher Kosmetiktücher | PET/i/a/PEw | L/i/PET:HV:PPw:PE L/i/PET:HV:PE:PEw:PE L/i/PET:HV:PPw:PP |
| 2 | z.B. Chips / Crisps | oPP/i/a/met:oPP oPP/i/a/oPP | oPP/i/a/met.PP:PP* L/i/PET:HV:PP:HV:PET:HV:PP* L/i/PP:PP:HV:EVOH:HV:PP:PP* *peelbar oder festsiegelnd |
| 3 | z.B. Hartkäse | oPA/PE | PA:HV:PE PET:HV:PE:HV:PSA:HV:PE |
| 4 | z.B. Getreide (Müsli) | oPP/i/a/PE PET/i/a/PE HDPE:lonomer | L/i/PP:PPpeel oPP/i/a/PA:HV:PE L/i/a/PET:HV:PE HDPE:lonomer |
| 5 | z.B. Röstkaffee KakaoISchokoiadenpulver Milchpulver Bohnenkaffee Fertigbackmischungen Zuckerkonfekt | PET/I/a/Alu/PE PET/I/a/PE oPP/I/a/PE oPP/i/a/oPP | L/i/met.PET:HV:PP:PE* L/i/met.PET:HV:PP:HV:PET:HV:PE* L/I/PET:HV:PP:HV:PAam:HV-PE* L/i/met.PET:HV:PP:PP* L/i/PET:HV:PP:PP:PE* oPP/i/a/PA.HV:PP L/i/PP:HV:PA:PP:PE L/i/SiOx.PLA.HV:TPS *peelbar oder festversiegelnd |

Die in Tabelle 1 zusammengestellten Beispiele erfindungsgemässer Laminate bzw. Filme weisen im Vergleich zu den entsprechenden Laminaten bzw. Filmen nach dem Stand der Technik die in Tabelle 2 zusammengestellten Vorteile auf.

**Tabelle 2**

| Gruppe | Erfindungsgemässe Laminate/Filme | Vorteile der erfindungsgemässen Laminate/Filme |
|---|---|---|
| 1 | L/i/PET:HV:PPw:PE L/i/PET:HV:PE:PEw:PE L/i/PET:HV:PPw:PP | - Vermeiden vom Laminierschritten |
| | | - Vermeiden von Reaktionsklebstoffen |
| | | - Vermeiden von Schnittkantendelamination durch Kleberhydrolyse |
| | | - Materialerspamis |
| 2 | oPP/i/a/met.PP:PP L/i/PET:HV:PP:HV:PET:HV:PP L/i/PP:PP:HV:EVOH:HV:PP:PP | - Erhöhung der Siegelschichtdicke vgl mit konventinellem oPP |
| | | - Beibehaltung der Steifigkeit bei dünneren Strukturen |
| | | - Vermeiden vom Laminierschritten |
| | | - Materialerspamis |
| 3 | PA:HV:PE PET:HV:PE:HV:PSA:HV:PE | - Wiederverschliessbarkeit |
| | | |
| | | - Vermeiden vom Laminierschritten |
| | | |
| | | - Materialerspamis |
| | | |
| 4 | L/i/PP:PPpeel oPP/i/a/PA:HV:PE L/i/a/PET:HV:PE HDPE:lonomer | - Vermeiden vom Laminierschritten |
| | | - Vermeiden von Reaktionsklebstoffen |
| | | - Materialersparnis |
| | | - verbesserte Stelfigkeit |
| 5 | L/i/met.PET:HV:PP:PE* L/i/met.PET:HV:PP:HV:PET:HV:PE* L/i/PET:HV:PP:HV:PAam:HV:PE* L/i/met.PET:HV:PP:PP* L/i/PET:HV:PP:PP:PE* L/i/SiOx.PLA.HV:TPS *peelbar oder festversiegelnd | |
| | | |
| | | - Vermeiden vom Laminierschritten |
| | | - Vermelden von Klebstoffen |
| | | - Materialersparnis |
| | | - Vollständig Bioabbaubar |
| | | |

## Patentansprüche

1. Schlauchbeutel aus einem mehrschichtigen Film,
**dadurch gekennzeichnet, dass**
zumindest ein Teil der Schichten des mehrschichtigen Films als 3B-Film vorliegt.

2. Schlauchbeutel nach Anspruch 1, **dadurch gekennzeichnet, dass** der 3B-Film mit wenigstens einer weiteren Schicht, insbesondere im Vorhanggussverfahren (Curtain Coating) oder ein Schlitzdüsenbeschichtungsverfahren (Slot Die Coating), beschichtet ist.

3. Schlauchbeutel nach Anspruch 1 oder 2, **dadurch gekennzeichnet, dass** der 3B-Film und/oder die wenigstens eine weitere Schicht metallisiert, insbesondere mit Aluminium oder rostfreiem Stahl beschichtet ist.

4. Schlauchbeutel nach Anspruch 1 oder 2, **dadurch gekennzeichnet, dass** der 3B-Film und/oder die wenigstens eine weitere Schicht keramisch, insbesondere mit SiOₓ oder mit Al₂O₃, beschichtet ist.

5. Schlauchbeutel nach Anspruch 1 oder 2, **dadurch gekennzeichnet, dass** der 3B-Film und/oder die wenigstens eine weitere Schicht bedruckt und/oder mit einem Thermoschutzlack versehen ist.

6. Schlauchbeutel nach einem der Ansprüche 1 bis 5, **dadurch gekennzeichnet, dass** der 3B-Film und/oder die wenigstens eine weitere Schicht aus komplett bioabbaubaren Polymeren bestehen.

7. Schlauchbeutel nach einem der Ansprüche 1 bis 6, **dadurch gekennzeichnet, dass** der 3B-Film eine Innenschicht, eine Kernschicht und eine Aussenschicht mit folgendem Aufbau aufweist und aus folgenden Materialien zusammengesetzt ist:
Innenschicht: Heisssiegelschicht enthaltend ein Material ausgewählt aus der Gruppe der Polyolefine (PO), Polyamide (PA), Polyester und deren Copolymere, sowie der lonomeren (ION), Schmelzkleber, insbesondere auf Basis von EVA, sowie Blends der vorgenannten Materialien.
Kernschicht: Polyamide, Polyester, Polyolefine und deren Copolymere, cycloolefinische Polymere, sowie die diese verbindenden Haftvermittler, insbesondere auf Basis von MAH, Acrylat oder Carbonsäuren, EVOH, PVOH oder aromatische Polyamide als Barriereschichten, selbstklebende Heisskleberschichten aus SBS, SIS, SEBS und einem Kleberharz.
Aussenschicht: Materialien, ausgewählt aus der Gruppe der Polyester, Polyamide, Polyolefine und deren Copolymere, mit ausreichender Thermoresistenz Eignung zur Vakuumbeschichtung.

8. Verwendung eines Schlauchbeutels nach einem der Ansprüche 1 bis 7 zum Verpacken von agressiven Füllgütem.

9. Verwendung eines Schlauchbeutels nach einem der Ansprüche 1 bis 7 zum Verpacken von zum Verpacken von Salzgebäck und Chips.

10. Verwendung eines Schlauchbeutels nach einem der Ansprüche 1 bis 7 zum Verpacken von Hartkäse.

11. Verwendung eines Schlauchbeutels nach einem der Ansprüche 1 bis 7 zum Verpacken von Zerealien und Müesli.

12. Verwendung eines Schlauchbeutels nach einem der Ansprüche 1 bis 7 zum Verpacken von Pulvermischungen für Getränke, Backwaren, gemahlenen Kaffee und Bohnenkaffee sowie Zuckerkonfekt.

13. Verwendung nach Anspruch 8, **dadurch gekennzeichnet, dass** der 3B-Film einen der Schichtaufbauten
L/i/PET:HV:PPw:PE
L/i/PET:HV:PE:PEw:PE
L/i/PET:HV:PPw:PP
aufweist.

14. Verwendung nach Anspruch 9, **dadurch gekennzeichnet, dass** der 3B-Film einen der Schichtaufbauten
oPP/i/a/met.PP:PP*
L/i/PET:HV:PP:HV:PET:HV:PP*
L/i/PP:PP:HV:EVOH:HV:PP:PP*
*peelbar oder festsiegelnd
aufweist.

15. Verwendung nach Anspruch 10, **dadurch gekennzeichnet, dass** der 3B-Film einen der Schichtaufbauten
PA:HV:PE
PET:HV:PE:HV:PSA:HV:PE
aufweist.

16. Verwendung nach Anspruch 11, **dadurch gekennzeichnet, dass** der 3B-Film einen der Schichtaufbauten
L/i/PP:PPpeel
oPP/i/a/PA:HV:PE
L/i/a/PET:HV:PE
HDPE:lonomer
aufweist.

17. Verwendung nach Anspruch 12, **dadurch gekennzeichnet, dass** der 3B-Film einen der Schichtaufbauten
L/i/met.PET:HV:PP:PE*
L/i/met.PET:HV:PP:HV:PET:HV:PE*
L/i/PET:HV:PP:HV:PAam:HV:PE*
L/i/met.PET:HV:PP:PP*
L/i/PET:HV:PP:PP:PE*
oPP/i/a/PA:HV:PP
L/i/PP:HV:PA:PP:PE
L/i/SiOx.PLA.HV:TPS
*peelbar oder festversiegelnd
aufweist.
